# EUROPÄISCHE PATENTSCHRIFT

(11) **EP 0 604 886 B1**
(45) Veröffentlichungstag und Bekanntmachung des Hinweises auf die Patenterteilung: **28.08.1996**
(21) Anmeldenummer: 93120605.6
(22) Anmeldetag: 21.12.1993
(51) Int. Cl.: B23K 20/12, A47J 27/00, H05B 3/68

(54) **Elektrisch beheiztes Kochgefäss**
Electrically heated cooking vessel
Récipient à mode de chauffage électrique

(30) Priorität: 21.12.1992 DE 9217353 U; 23.06.1993 DE 9309335 U; 02.08.1993 BE 9300805; 22.11.1993 BE 9301286; 22.11.1993 BE 9301287; 07.12.1993 BE 9301348
(43) Veröffentlichungstag der Anmeldung: 06.07.1994
(73) Patentinhaber: Vandaele, Stephan, B-8300 Knokke-Heist (BE)
(72) Erfinder: Vandaele, Stephan, B-8300 Knokke-Heist (BE)
(74) Vertreter: Hassler, Werner, Dr.

(56) Entgegenhaltungen:
- EP-A- 0 307 555
- EP-A- 0 392 940
- DE-A- 3 739 318

## Beschreibung

Die Erfindung betrifft ein Verfahren zur Herstellung eines elektrisch beheizten Kochgefäßes (1), dessen Aluminiumheizplatte (3) durch eine Reibschweißverbindung mit der Bodenwand (2) des Kochgefäßes (1) verbunden ist und einen Rohrheizkorper (5) aufweist
Unter einem Kochgefäß sind Kochtöpfe, Kasserolen, Bratpfannen, Frittiergeräte, Eierkochschalen, Wasserkessel und dergleichen zu verstehen.

Aus hygienischen Gründen, insbesondere wegen der Korrosionsfreiheit sind Kochgefäße aus Edelstahl bevorzugt. Eine Aluminiumheizplatte ist aus Gründen des Wärmeübergangs erwünscht. Ein Kochgerät der genannten Art ist aus der EP 0 307 555 B1 bekannt. Die Aluminiumheizplatte wird durch Anwendung von Druck und Wärme mit dem Stahlboden verbunden. Die Befestigung eines Thermostaten oder anderer Funktionsteile an der Aluminiumheizplatte erfordert besondere Arbeitsvorgänge zur Befestigung desselben.

Bei einem als Wasserkocher dienenden Kochgefäß ist zum Schutz gegen Überhitzung und/oder Durchbrennen des Rohrheizkörpers ein Thermostat als Trockenkochsicherung bekannt. Zur Vermeidung eines übermäßigen Verdampfens des Wassers ist auch die Verwendung eines Dampfthermostaten bekannt. Eine thermisch günstige Befestigung und ein Schutz des Thermostaten bereiten zusätzliche Probleme.

Die DE-A-37 39 318 beschreibt ein Verfahren, wonach eine Aluminiumheizplatte durch Reibschweißen mit der Bodenwand eines Kochgefäßes verbunden wird. An der Aluminiumheizplatte ist zentral ein Bolzen geformt, der mit einer Aufnahme für weitere Bauteile zusammenwirkt. Die Formung dieses zentral angeordneten Bolzens beeinträchtigt nicht das radiale Fließen des Aluminiumwerkstoffes beim Reibschweißen.

Aufgabe der Erfindung ist eine Formung von Bolzen oder Nietstiften an beliebiger exzentrischer Stelle beim Reibschweißen.

Diese Aufgabe wird bei einem Verfahren der eingangs genannten Art nach der Erfindung dadurch gelöst, daß beim Reibschweißen in der Aluminiumheizplatte (3) an beliebiger Stelle Bolzen (6) und/oder Nietstifte (7) durch Fließen geformt werden, die zur Befestigung von Funktionsteilen dienen.

Die Erfindung unterscheidet sich durch die simultane Bildung durch Fließen der Bolzen und/oder Nieten an beliebiger exzentrischer Stelle, gegebenfalls mit der Formung der Rille beim Reibschweißvorgang vom, Stand der Technik. Somit ist für die Formung oder Anbringung der Bolzen kein besonderer Arbeitsgang erforderlich. Die Nieten ermöglichen eine einfache Nietbefestigung von Bauteilen und Funktionsteilen.

Besonders günstige Verformungsverhältnisse und eine einfache Befestigung erzielt man dadurch, daß eine Aluminiumheizplatte aus elastischen Weichaluminium eingesetzt wird.

Die Berestigung ist dadurch in sicherer Weise möglich, daß ein Thermostat auf die Bolzen aufgesetzt und durch Nietköpfe festgehalten wird.

Zur thermischen Abschirmung des Thermostaten wird vorgeschlagen, daß eine Tragbrücke aus einem Werkstoff mit geringerer Wärmeleitfähigkeit als Aluminium auf Bolzen aufgesetzt ist und den Thermostaten trägt.

Die Funktion des Dampfthermostaten wird dadurch gefördert, daß ein Dampfrohr in einen Durchgang der Bodenwand eingesetzt wird, daß im Austrittsbereeich des Dampfrohres ein Dampfthermostat angeordnet wird und daß ein als Trockenkochsicherung wirkender Thermostat mit einem Bimetallschaltelement auf eine Ausschaltsteuervorrichtung einwirkt. Dadurch erreicht man eine kompakte Bauweise des Kochgefäßes und eine sichere Schaltfunktion gegen Fehlheizung.

Eine einfache Durchführung erzielt man dadurch, daß das Dampfrohr mit einer Dichtung in den Durchgang eingesetzt wird.

Eine andere Verbindung ohne zusätzliche Dichtelemente wird dadurch erzielt, daß ein Flansch des Dampfrohres in einen Falz am Durchgang eingesetzt ist.

Eine abgewandelte Verbindung ist derart ausgebildet, daß der Rand des Durchgangs in einem Falz des Dampfrohrs sitzt.

Eine vorzeitige Wirkung der Trockenkochsicherung wird dadurch, daß der Thermostat zur Trockenkochsicherung in einer in das Innere des Gefäßes gericheten Innenwölbung des Gefäßbodens angeordnet wird.

Ein Wassereintritt in das Dampfrohr wird bei einem automatischen elektrischen Wasserkessel dadurch verhindert, daß unterhalb eines nach unten offenen Durchgangs des Eintrittsrohrs des Dampfrohres ein Käfig zur Aufnahme eines den Durchgang abschließenden Schwimmerkörpers angeordnet wird.

Der Schwimmerkörper wird als Leichtgewichthohlkugel ausgebildet.

Der Betrieb einer Flöte des Wasserkessels wird dadurch ermöglicht, daß ein weiterer spezifisch schwerer Ventilkörper zum Verschluß des Durchgangs angeordnet wird, der eine zeitweilige Erhöhung des Dampfdrucks zur Betätigung einer Flöte bewirkt und sicherstellt, daß nur eine kleine Dampfmenge durch das Dampfrohr tritt.

Eine sichere Ventilwirkung erzielt man dadurch, daß der Käfig durch zwei Kammern gebildet wird, die durch eine Zwischenwand mit einem als beidseitiger Ventilsitz dienenden Durchgang getrennt sind.

Ein weiterer Schutz gegen Wassereintritt in das Dampfrohr wird dadurch erzielt, daß die Bodenwandung des Käfig als den Käfig allseitig überragende Deflektorplatte ausgebildet ist.

Ausführungsbeispiele der Erfindung werden anhand der Zeichnung erläutert, in der darstellen:

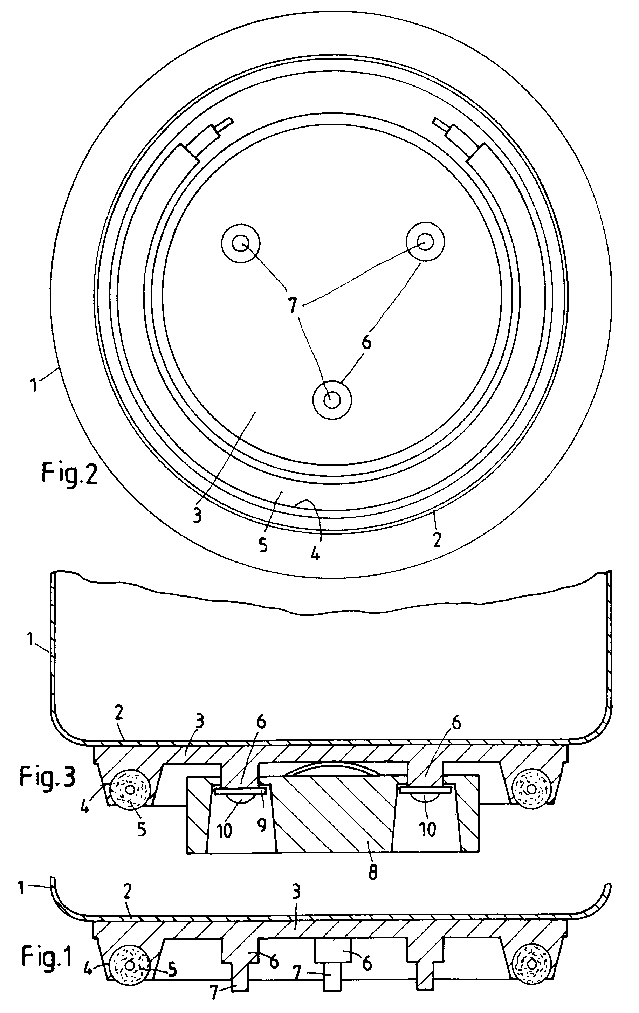

Fig. 1 einen Schnitt durch den Bodenteil des Kochgefässes,
Fig. 2 eine Ünteransicht zu Fig. 1,
Fig. 3 einen Schnitt durch den komplettierten Bodenteil,
Fig. 4 einen Schnitt durch ein Kochgefäß,
Fig. 5 eine Ausbildung der Durchführung,
Fig, 6 eine weitere Ausbildung der Durchführung,
Fig. 7 eine dritte Ausbildung der Durchführung,
Fig. 8 eine Ausbildung als Wasserkessel und
Fig. 9 eine Teilansicht in Pfeilrichtung IX.

Ein Kochgefäß 1 besteht aus Edelstahl und bat eine im wesentlichen ebene Bodenwand 2. Eine Aluminiumheizplatte 3 aus elastischem Weichaluminium ist mit der Bodenwand 2 unter Anwendung von Druck und Wärme stoffschlüssig verbunden.

Die Alumiumheizplatte 3 nimmt einen Rohrheizkörper 5 auf. Derselbe kann in einer Rille 4 sitzen. Diese Rille 4 ist während des Reibschweißvorgangs geformt. Auch eine andere Befestigung des Heizkörpers durch Einpressen ist möglich.

Während des Reibschweißvorgangs sind Bolzen 6 und Nieten 7 durch Fließen geformt. Diese Formung ist an beliebiger gewünschter Stelle der Aluminiumheizplatte möglich.

Auf die Bolzen 6 ist ein Thermostat 8 aufgesetzt, wobei die Nieten 7 durch Durchgänge hindurchtreten. Über einer Unterlegscheibe 9 wird ein Nietkopf 10 geformt. Dadurch ist der Thermostat festgelegt. Diese einstückig angeformten Bolzen legen die jeweiligen Bauteile genau fest. Die Nietköpfe können beim Aufsetzten der Bauteile gebildet werden.

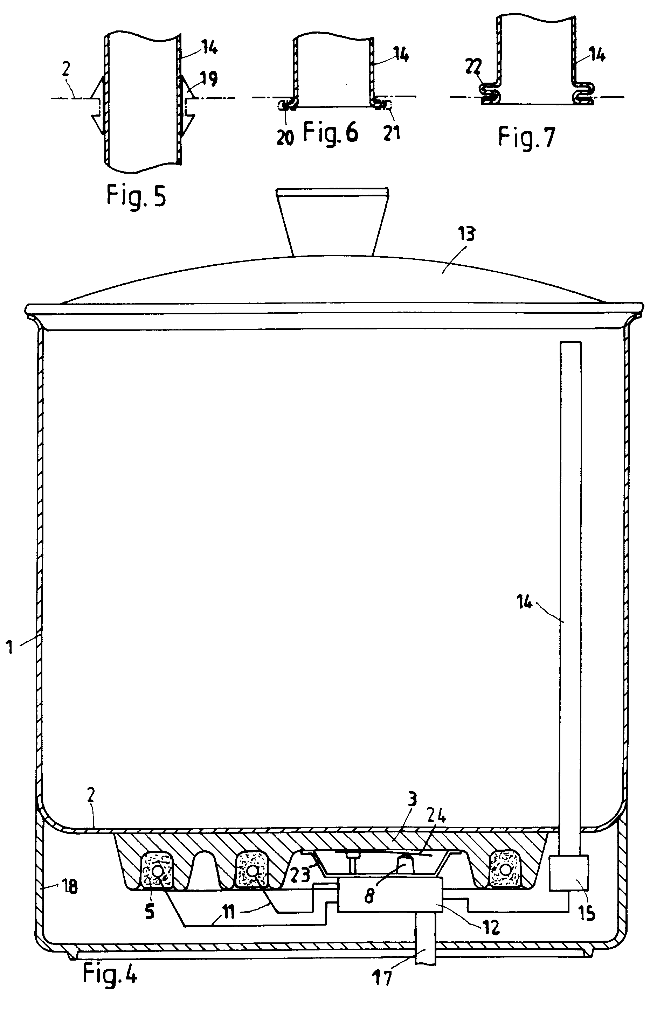

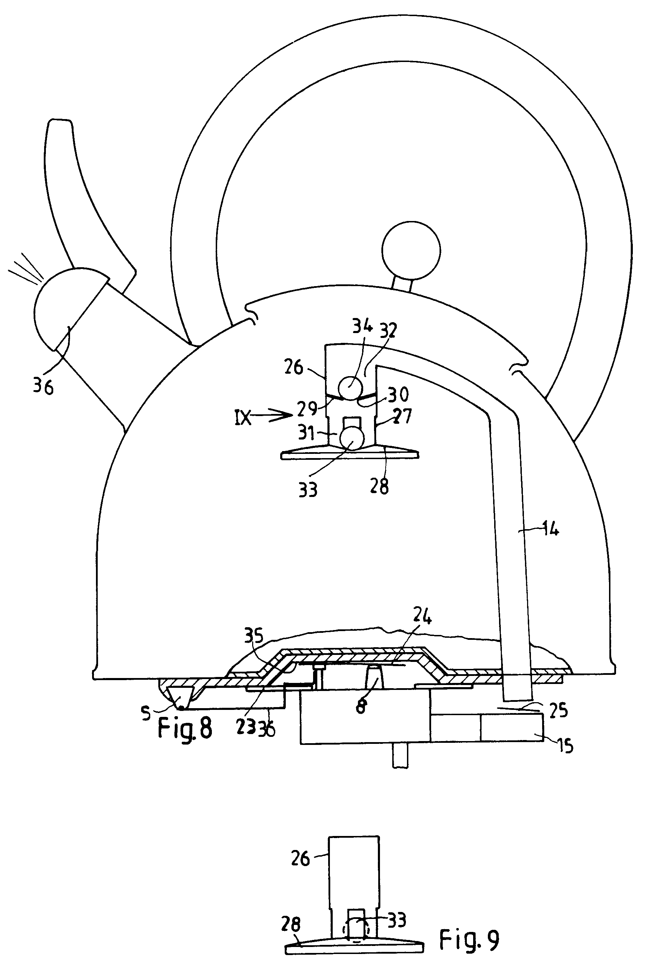

Das in Fig. 4 dargestellte Kochgefäß 1 als Wasserkocher, Kochtopf, Eierkocher oder dergleichen besteht aus Edelstahl und hat auch eine Bodenwand 2 aus Edelstahl. Die Beheizung des Kochgefäßes erfolgt durch eine mit dem Gefäßboden verbundene Heizplatte 3 aus Aluminium, die einen Rohrheizkörper 5 aufnimmt. Die elektrischen Anschlüsse des Rohrheizkörpers 5 sind als Leitungen 11 ausgebildet und über eine Ausschaltsteuervorrichtung 12 mit einer Anschlußleitung 17 oder einer anderen Anschlußvorrichtung verbunden. In anderer Weise können die Anschlüsse auch als Kontakfedern ausgebildet sein, wie dies in Fig. 8 dargestellt ist.

Das Kochgefäß ist durch einen Deckel 13 abschließbar. Ein bis zum Füllniveau reichendes Dampfrohr 14 ist durch einen Durchgang der Bodenwand 2 geführt. Im Mündungsbereich des Dampfrohres 14 ist ein Dampfthermostat 15 angeordnet.

Ein weiterer Thermostat 8 befindet sich an der Heizplatte 3 und dient als Trockenkochsicherung.

Beide Thermostate 15 und 8 sind mit der Ausschaltsteuervorrichtung 12 verbunden. So kann einerseits durch den Dampf und andererseits durch eine Überhitzung der Heizplatte bei leeren Kochgefäß eine automatische Abschaltung und damit ein Schutz des Rohrheizkörpers erfolgen. Die beiden Thermostate 15 und 8 können miteinander kombiniert sein. Dies hängt von den verfügbaren Thermostatelementen ab.

Eine Bodenschale 18 schließt das Kochgefäß 1 nach unten ab und dient zum Schutz der Heizplatte 3 und der Schaltelemente.

Fig. 5 zeigt eine Ausführung der Durchführung des Dampfrohres 14. In den Durchgang der Bodenwand 2 ist eine Dichtmanschette 19 eingesetzt, die den Mantel des Dampfrohres 14 dicht umschließt.

Fig. 6 zeigt eine Durchführung als Blechverbindung. Ein nach außen gerichteter Flansch 20 des Dampfrohres 14 ist in einen Falz 21 der Bodenwand 2 eingebördelt. Dadurch ergibt sich eine dichte Verbindung.

In anderer Weise kann nach Fig 7. auch des Rand des Durchgangs in einen Falz 22 des Dampfrohres 14 eingebördelt sein. Es sind auch Abwandlungen dieser Blechverbindungen möglich.

Nach Fig. 4 sind der Thermostat 8 beziehungsweise die Ausschaltvorrichtung 12 auf einer Tragbrücke 23 befestigt. Zur thermischen Isolierung besteht die Tragbrücke 23 aus einen, Werkstoff mit geringerer Wärmeleitfähigkeit als Aluminium. Der Thermostat 8 hat ein Bimetallschaltelement 24, das unmittelbar an der Aluminiumheizplatte 3 oder der Bodenwand 2 anliegt und bei entsprechender Erhitzung schaltet. Somit erreicht man einen Trockenkochschuztz.

Die Fig. 8 und 9 zeigen die Anwendung der Erfindung bei einem Wasserkessel als Kochgefäß 1. Die Bodenwand 2 und die Heizplatte 3 weisen eine ins Innere des Gefäßes gerichtete Innenwölbung 35 auf, in die der Thermostat 8 mit Hilfe der Tragbrücke 23 eingesetzt ist. Die nach innen gerichtete Innenwölbung 35 wird trocken, ehe die gesamte Bodenwand 2 trocken wird. Damit erreicht man eine vorzeitige Abschaltung des Heizkörpers und damit einen verbesserten Trockenkochschutz. Die elektrischen Anschlüsse des Rohrheizkörpers 5 sind als Blattfedern 36 ausgebildet. Die Blattfedern können eine geeignete Form haben.

Die Mündung des Dampfrohres 14 ist auf einen Sensor 25 des Dampfthermostaten 15 gerichtet. Ein Austritt von übermäßiger Feuchtigkeit oder gar von Wasser aus dem Dampfrohr 14 muß verhindert werden, damit die Funktionsteile nicht durch Korrosion leiden. Das Eintrittsrohr 26 des Dampfrohrs 14 ist nach unten gerichtet und durch einen Käfig 27 mit einer bodenseitigen, den Käfig allseitig überragenden Deflektorplatte 28 abgeschlossen.

Der Käfig 27 umfaßt zwei durch ein Zwischenwand 29 mit einem Durchgang 30 getrennte Kammern 31 und 32. Die untere Kammer 31 hat seitliche Eintrittsöffnungen und enthält einen Schwimmerkörper 33, der spezifisch leichter als Wasser ist, und daher schwimmt. Der Schwimmerkörper 33 kann eine Leichtgewichthohlkugel sein.

Ein schwerer Ventilkörper 34 befindet sich in der oberen Kammer 32 und liegt an dem Rand des Durchgangs 30 an. Der Durchgang 30 stellt also einen zweiseitige Ventilsitz dar. Der Ventilkörper 32 ermöglicht die Funktion einer Flöte des Wasserkessels.

Bei Überfüllung des Wasserkessels kommt der Schwimmerkörper 33 an dem Durchgang 30 zur Anlage und verhindert einen Wassereintritt in das Dampfrohr 26, 14. Somit kann kein Wasser durch das Dampfrohr 14 austreten.

Beim Kochvorgang wird der entstehende Dampf durch den Ventilkörper 34 zurückgehalten, so daß der Dampfdruck im Innenraum des Wasser kessels ansteigt und die Flöte wirksam werden kann. Der Ventilkörper 34 verzögert den Dampfaustritt durch das Dampfrohr um mehrere s bis zu mehr als 10 s. Dieses reicht für ein Flötensignal aus. Mit zunehmendem Dampfdruck wird der Ventilkörper 34 angehoben, so daß Dampf den Dampfthermostaten 15 beeinflußt. Der Wasserkessel wird also abgeschaltet, und der Ventilkörper 34 schließt wieder das Dampfrohr 14 ab. Dadurch wird vermieden, daß eine große Menge feuchten Dampfes durch das Dampfrohr in den Bereich des Thermostaten und der elektrischen Bauelemente gelangt.

Die Deflektorplatte 28 hält Wasserspritzer zurück, so daß kein Wasser in das Dampfrohr eintreten kann. Auch die Durchgänge werden nicht durch Wasser beeinträchtigt.

## Patentansprüche

1. Verfahren zur Herstellung eines elektrisch beheizten Kochgefäßes (1), dessen Aluminiumheizplatte (3) durch eine Reibschweißverbindung mit der Bodenwand (2) des Kochgefäßes (1) verbunden ist und einen Rohrheizkörper (5) aufweist, dadurch gekennzeichnet, daß beim Reibschweißen in der Aluminiumheizplatte (3) an beliebiger Stelle Bolzen (6) und/oder Nietstifte (7) durch Fließen geformt werden, die zur Befestigung von Funktionsteilen dienen.

2. Verfahren nach Anspruch 1, dadurch gekennzeichnet, daß eine Aluminiumheizplatte (3) aus elastischen Weichaluminium eingesetzt wird.

3. Verfahren nach Anspruch 2, dadurch gekennzeichnet, daß ein Thermostat (8) auf die Bolzen (6) aufgesetzt und durch Nietköpfe (10) festgehalten wird.

4. Verfahren nach Anspruch 3, dadurch gekennzeichnet, daß eine Tragbrücke (24) aus einem Werkstoff mit geringerer Wärmeleitfähigkeit als Aluminium auf Bolzen aufgesetzt wird und den Thermostat (8) trägt.

5. Verfahren nach Anspruch 3 oder 4, dadurch gekennzeichnet, daß ein Dampfrohr (14) in einen Durchgang der Bodenwand (2) eingesetzt wird, daß der als Dampfthermostat (15) ausgebildete Thermostat im Austrittsbereich des Dampfrohres angeordnet wird und daß ein als Trockenkochsicherung wirkender Thermostat (8) mit einem Bimetallschaltelement (24) auf eine Ausschaltsteuervorrichtung (12) einwirkt.

6. Verfahren nach Anspruch 5, dadurch gekennzeichnet, daß das Dampfrohr (14) mit einer Dichtung (19) in den Durchgang eingesetzt wird.

7. Verfahren nach Anspruch 5, dadurch gekennzeichnet, daß ein Flansch des Dampfrohres in einen Falz am Durchgang eingesetzt wird.

8. Verfahren nach Anspruch 5, dadurch gekennzeichnet, daß der Rand des Durchgangs in einen Falz des Dampfrohrs eingesetzt wird.

9. Verfahren nach einem der Ansprüche 1 bis 8, dadurch gekennzeichnet, daß der Thermostat (8) zur Trockenkochsicherung in einer in das Innere des Gefäßes gericheten Innenwölbung (35) des Gefäßbodens angeordnet wird.

10. Verfahren nach einem der Ansprüche 2 bis 9, dadurch gekennzeichnet, daß unterhalb eines nach unten offenen Durchgangs (30) des Eintrittrohrs (26) des Dampfrohres (14) ein Käfig (27) zur Aufnahme eines den Durchgang (30) abschließenden Schwimmerkörpers (33) angeordnet wird.

11. Verfahren nach Anspruch 10, dadurch gekennzeichnet, daß der Schwimmerkörper (33) als Leichtgewichthohlkugel ausgebildet wird.

12. Verfahren nach Anspruch 10 oder 11, dadurch gekennzeichnet, daß ein weiterer spezifisch schwerer Ventilkörper (34) zum Verschluß des Durchgangs (30) angeordnet wird, der eine zeitweilige Erhöhung des Dampfdrucks im Kochgefäß zur Betätigung einer Flöte (36) bewirkt und sicherstellt, daß nur eine kleine Dampfmenge durch das Dampfrohr tritt.

13. Verfahren nach einem der Ansprüche 10 bis 12, dadurch gekennzeichnet, daß der Käfig (21) durch zwei Kammern (31, 32) gebildet wird, die durch eine Zwischenwand (29) mit einem als beidseitiger Ventilsitz dienenden Durchgang (3) getrennt sind.

14. Verfahren nach einem der Ansprüche 10 bis 13, dadurch gekennzeichnet, daß die Bodenwandung des Käfig als den Käfig allseitig überragende Deflektorplatte (28) ausgebildet wird.

## Claims

1. Process for manufacturing of an electrically heated cooking vessel (1) having an aluminium heating plate (3) bonded to the bottom side (2) of the cooking vessel (1) by a friction welding process and having an electric heating element (5), characterized in that during friction welding of the aluminium heating plate (3) screw bosses (7) an/or riveting pins (6) are formed by extrusion in order to fix the functioning parts of the electric vessel.

2. Process according to claim 1, characterized in that the aluminium heating plate (3) is made out of elastic soft aluminium.

3. Process according to claim 2, characterized in that a thermostat (8) is put on the bosses (6) and is fixed by the riveting heads (10).

4. Process according to claim 3, characterized in that a carriage bracket (24) made out of a type of raw material with lower heat conducting capacity than aluminium is fixed on the rivet pins/screw bosses and carries the thermostat (8).

5. Process according to claim 3 or 4, characterized in that a steam pipe (14) is put through the bottom side (2) of the cooking vessel (1), characterized in that the thermostat (15) used as steamstat faces the lower exit end of the steam pipe and that a thermostat used as dryboil protection (8) affects the switch off system (12) by means of a bimetal switch element.

6. Process according to claim 5, characterized in that a steampipe (14) is securely fixed by means of a sealing ring (19) in the opening.

7. Process according to claim 5, characterized in that a connection edge of the steam pipe is enclosed in a fold-like manner by a fold edge of the bottom.

8. Process according to claim 5, characterized in that the bottom hole has a connection edge which is enclosed in a fold-like manner by a fold edge of the steampipe wall.

9. Process according to one of claims 1 to 8, characterized in that the thermostat (8) used as dryboil protection is fixed in a recess (35) towards the inside of the vessel.

10. Process according to one of the claims 2 to 9, characterized in that under a downwardly directed open passage (30) of the entry (26) of the steampipe (26) a cage (27) is added in order to hold a floating ball (33) that can close the passage (30).

11. Process according to claim 10, characterized in that the floating ball (33) is made as a lightweight hollow ball.

12. Process according to claim 10 or 11, characterized in that a further valve element (34) having a higher specific gravity is added in order to close off the passage (30), this valve element (34) causes a temporary increase in steam pressure in the cooking vessel to activate a whistle (36) and it makes sure that only a small amount of steam passes through the steam pipe.

13. Process according to one of the claims 10 to 12, characterized in that the cage (27) is made out of two cavities (31, 32) which are separated by a wall (29) with a passage hole (30) serving as location means for the valve elements.

14. Process according to one of the claims 10 to 13, characterized in that the bottom wall of the cage is formed in the shape of a deflection plate (28) extending the cage on all sides.

## Revendications

1. Procédé de fabrication d'un récipient à cuire (1) chauffé electrique comportant une plaque d'aluminium chauffante (3) sur le côté du fond (2) du récipient à cuire (1) qui est pressée sur la surface du fond récipient par un procédé de soudage par friction, et qui retient un corps chauffant tubulaire (5), caractérisé en ce que, lors du soudage par friction de la plaque d'aluminium (3) des goujons de fixation (6) et/ou des rivets (7) sont faconnés par formage par fluage en une opération avec le soudage par friction pour y attacher des parties de fonctionnement du récipient à cuire.

2. Procédé suivant la revendication 1, caractérisé en ce que la plaque d'aluminium est fabriquée en aluminium doux et élastique.

3. Procédé suivant la revendication 2, caractérisé en ce que un thermostat (8) est monté sur les goujons (6) et est tenu par des têtes de rivets (10).

4. Procédé suivant la revendication 2, caractérisé en ce qu'un pontet faconné en matériel primaire dont la conductivité thermique est plus faible que celle de l'aluminium, est fixé sur les goujons ou rivets et porte le thermostat.

5. Procédé suivant la revendication 3 ou 4, caractérisé en ce que un conduit de vapeur (14) est fixé dans un passage du fond (2) du récipient à cuire, caractérisé en ce que le thermostat utilisé comme thermostat de vapeur (15) est positionné là où le conduit de vapeur sort du récipient à cuire, et que un thermostat de sécurité de surchauffe (8) affecte par un élément bimétallique (24) un système de control (12) de mise hors fonctionnement.

6. Procédé suivant la revendication 5, caractérisé en ce qu'un joint d'étanchéité (19) est utilisé pour la fixation du conduit de vapeur (14) dans le trou de passage du récipient.

7. Procédé suivant la revendication 5, caractérisé en ce qu'un bord de liaison du conduit de vapeur est serti dans un rebord de sertissage du trou de passage.

8. Procédé suivant la revendication 5, caractérisé en ce que le bord du trou de passage est serti dans un rebord de sertissage du conduit tubulaire de vapeur.

9. Procédé suivant une des revendications 1 à 8, caractérisé en ce que le thermostat (8) de sécurité de surchauffe est positionné dans un renfoncement (35) du fond vers l'intérieur du récipient à cuire.

10. Procédé suivant une des revendications 2 à 9, caractérisé en ce que a dessous de l'ouverture (30) du conduit de l'entrée (26) du conduit de vapeur (14), est aménagé une cage (27), dans laquelle se trouve a flotteur (33) qui peut obturer l'ouverture (30).

11. Procédé suivant la revendication 10, caractérisé en ce que le flotteur (33) est une boule creuse très lègère.

12. Procédé suivant la revendication 10 ou 11, caractérisé en ce que une valve additionelle (34) de la specific gravité plus élevée est ajoutée, qui peut obturer l'entrée du conduit de vapeur (30) cette valve provoque une augmentation temporaire de la pression de vapeur dans le récipient à cuire, ce qui active un sifflet (36) et cette valve a pour effet que seulement une quantité réduite de vapeur puisse entrer dans le conduit de vapeur.

13. Pocédé suivant une des revendications 10 à 12, caractérisé en ce que la cage (27) est composée de deux parties (31, 32) qui sont séparées par une cloison (29) avec un trou de passage (30) servant d'assise pour les deux obturateurs qui se trouvent de chaque côté de la cloison.

14. Procédé suivant une des revendications 10 à 13, caractérisé en ce que le fond dé là cage comporte un déflecteur sous forme d'une plaque (28) entourant la cage complètement.
